# EUROPEAN PATENT APPLICATION

(11) **EP 3 989 066 A1**
(43) Date of publication of application: **27.04.2022**
(21) Application number: 20203123.3
(22) Date of filing: 21.10.2020
(51) Int. Cl.: G06F 9/50, G06F 9/54, G06N 10/00

(54) **SYSTEM AND METHOD FOR SOLVING AN OPTIMIZATION PROBLEM**

(71) Applicant: Deutsche Telekom AG, 53113 Bonn (DE)
(72) Inventor: GEITZ, Marc, 58089 Hagen (DE); SCHNIEDERS, Dominik, 52078 Aachen (DE)
(74) Representative: Raible Deissler Lehmann Patentanwälte PartG mbB

(57) **Abstract**

A method for having an optimization problem solved, comprising the steps: a client application requests a solution of an optimization problem and receives the requested solution of the optimization problem; a cloud system for solving an optimization problem; and a computer program product for solving an optimization problem.

## Description

The invention relates to a method for solving an optimization problem, comprising the step: a client application requests a solution of an optimization problem and receives the requested solution of the optimization problem. The invention further relates to a cloud system for solving an optimization problem and a computer program product for solving an optimization problem.

Optimization problems occur in a plurality of different technical fields. Accordingly, a plurality of different methods for solving an optimization problem which is usually related to an objective function, i.e. target function of the optimization problem, are known and carried out in practical cases. The objective function may comprise one or more equality constraints, i.e. constraint conditions, and, particularly, be a Lagrangian function comprising a Lagrange multiplier for each equality constraint.

Entities for solving an optimization problem are usually called optimizers. An optimizer may be configured as a software module being executed by a computer or as a separate dedicated hardware module being connected to a computer or even as a separate dedicated computer.

The higher a required performance for solving the optimization problem is the more expensive the optimizer usually is. A high-performance optimizer, hence, may be configured to be executed or controlled by a server within a client-server architecture in order to allow for sharing the high-performance optimizer between a plurality of clients.

A client may be configured as a client application being executed by a terminal device of a mobile or fixed line communication network. The client may request a solution of an optimization problem and receive the requested solution from the optimizer which is connected to the communication network and accessible to the client via the communication network.

However, there are a plurality of different optimization problems, a plurality of different optimizers and a plurality of different formats of related objective functions wherein a particular optimizer usually favors particular optimization problems and requires a particular format of the objective function.

It is therefore an object of the invention to suggest a method for solving an optimization problem which depends neither on the requesting client nor on the involved optimizer and allows for a high optimization performance. Another object of the invention is providing a cloud system for solving an optimization problem and a computer program product for solving an optimization problem.

A first aspect of the invention is a method for solving an optimization problem, comprising the steps: a client application requests a solution of an optimization problem and receives the requested solution of the optimization problem. These are the very basic steps the client application has to perform in order to have the optimization problem solved. The optimization problem may be related to industry 4.0 issues, e.g. work and production plans, control of industrial robots, resource load, logistics processes, material provision and procurement processes etc.

According to the invention the method comprises the further steps: the client application transmits an optimization request to an optimization service being executed by a cloud server of a cloud system, the optimization request defining the optimization problem; the optimization service receives the optimization request and transmits an objective function to an optimizer being different from the optimization service, the objective function modeling the optimization problem; the optimizer receives the objective function, calculates an extreme of the received objective function and transmits the calculated extreme to the optimization service; and the optimization service transmits the requested solution to the client application, the solution resulting from the received extreme. The optimization service hides the optimizer from the client application as an intermediate instance and may be located remote from the optimizer. The optimization service may perform relevant tasks in order to reduce a load of the client application and/or a load of the optimizer and/or in order to reduce a response time for the client application, i.e. a time between transmitting the optimization request and receiving the requested solution. The optimization service may further transform the extreme received from the optimizer into the requested solution, e.g. a bit sequence comrising a plurality of 0s and 1s into a format accepted by the client application. The optimization service may transmit the objective function to the optimizer by using a software development kit (SDK) provided by a manufacturer of the optimizer or a third-party software like Zapata or QCWare.

In a preferred embodiment, the optimizer calculates the extreme of the objective function by linear optimization, annealing, simulated annealing, executing a Monte Carlo algorithm, quantum annealing or quantum computing. The optimizer preferably calculates a global minimum of the objective function. Optimizers using simulated annealing or a the Monte Carlo are called classical optimizers. simulated annealers. Optimizers using an algorithm inspired by quantum theory are called quantum-inspired annealers. Optimizers using real quantum effects, i.e. a superposition or a tunnel effect, are called quantum annealers. Quantum-inspired annealers and quantum annealers are configured to solve stoquastic Hamiltonian optimization problems. Quantum computing may be performed by a universal quantum computer or by an adiabatic quantum computer.

In some embodiments the client application creates the objective function from an optimization model and transmits the created objective function to the optimization service as part of the optimization request and the optimization service forwards the objective function to the optimizer. The client application knows the format of the objective function required by the optimizer and removes a computational load from the optimization service.

In alternative embodiments the client application transmits an optimization model to the optimization service as part of the optimization request and the optimization service creates the objective function from the optimization model. A computational load of creating the objective function is removed from the client application which does not have to know the format of the objective function required by the optimizer.

The optimization service may receive the calculated extreme and calculate the requested solution from the received extreme. The calculation substantially comprises a transformation, e.g. a conversion of a sequence of bit values (zeros and ones) representing the calculated extreme into a data format specific for the client representing the requested solution.

Advantageously, the optimization service is executed on a virtual machine or in a container provided by a cloud operating system being executed by the cloud server. The cloud operating system manages computing, networking and storing resources of the cloud server and assigns any required resource to the virtual machine or the container executing the optimization service.

In a preferred embodiment, the optimization request is transmitted and received via a REST (REpresentional State Transfer) interface, an XML (eXtensible Markup Language) interface or a file interface of the client application and the optimization service, respectively. The REST interface, the XML interface and the file interface are standardized and/or easy-to-implement interfaces allowing for an economic development of the optimization service and each involved client application.

The objective function is preferably created as a quadratic unconstrained binary optimization (QUBO) model, a linear optimization model or a Monte Carlo model. The model to create depends on the optimizer working thereon.

In many embodiments a scheduler of an access point of a radio cell of a mobile communication network requests, possibly real-time or at least near-time, optimal configuration data for the radio cell as the solution of a radio cell configuration problem as the optimization problem. The scheduler assigns spectral resources of the radio cell to each terminal device, i.e. user equipment or industrial robot. The scheduler is responsible for providing a committed quality of service (QoS) for a maximum number of terminal devices being located in and connected to the radio cell. The radio cell configuration is optimal when each application of a terminal device is assigned sufficient spectral resources for an adequate operation of the application and the sum of all assigned spectral resources together do not exceed the available spectral resources of the radio cell.

A second aspect of the invention is a cloud system for solving an optimization problem, comprising an optimizer for solving the optimization problem. The cloud system may be accessible for a terminal device via a radio access point of a mobile communication network.

According to the invention, the cloud system comprises an optimization service being different from the optimizer and a cloud server for executing the optimization service, the cloud system being configured to carry out an inventive method. The optimization service hides the optimizer from the client application. The optimization service may also be executed in a virtual container of container management system which is particularly provided by the cloud server.

In some embodiments the cloud server comprises the optimization service and/or the optimizer. The cloud server may comprise a cloud operation system, i.e. Openstack/KVM, VMWare, Azure, AWS or Open Telekom Cloud to name only a few. The cloud operation system may manage computing, networking and storing resources and provide a virtual machine or a container to execute the optimization service. The cloud server preferably comprises the optimizer.

The optimizer may be a software module being executable in a virtual machine or a container provided by the cloud operating system.

Preferably, the cloud server is an edge cloud server being located at a radio access point of a communication network. The edge cloud server is located at the very edge of the communication network and, thereby, allows for a very small latency, i.e. for providing the solution of the optimization problem "near-time", e.g. after a few milli seconds to few seconds at most.

In advantageous embodiments the radio access point is a public radio access point or a campus radio access point and/or the radio access point is a 5G radio access point. The public radio access point may be connected to publicly, while the campus radio access point is reserved for a special usage, i.e. by an airport, by a company, by an official institution and the like. The radio access point may be an LTE base station, i.e. a 4G Node-B, or a 5G radio access point.

The optimizer may be configured as a hardware entity or as a software module and/or the optimizer may be configured as a quantum computer and/or the optimizer may be located remote from the cloud server. The optimizer may be, for instance, a digital annealer unit (DAU) as provided by Fujitsu, the DAU being based on a classical ISIC hardware and having a PCI Express interface for connecting to the cloud server, or a quantum computer actually requiring very complex and restrictive operational conditions.

A third aspect of the invention is a computer program product for solving an optimization problem, comprising a computer readable storage medium storing a program code, the program code being executable by a cloud server. The computer program product may be a CD, a DVD, a USB stick and the like. The computer program product may also be a memory chip, a hard drive, a cloud server, a repository, an image, a file share and the like. The program code stored on the computer program product may be executable by the cloud server immediately or after having been installed thereon, respectively.

According to the invention the program code causes the cloud server to carry out an inventive method when being executed by a processor of the cloud server. In other words, the program code upgrades the cloud server to provide the inventive optimization service.

It is an essential advantage of the inventive method that it may be easily integrated in a cloud system, particularly an edge cloud system, in order to provide "optimization as a service". Optimization as a service extends offers an attractive new line of business for mobile network operators or cloud operators. Existing mobile network clients, particularly edge cloud clients, may be provided with an additional benefit. Work and production plans, control of industrial robots, resource load, logistics processes, material provision and procurement processes etc. may be optimized. Also a mobile network operator may benefit from the inventive method. For instance, configurations of radio cells of a mobile communication network may be optimized. Apart from that, an existing ICT (Information and Communication Technology) portfolio may be extended, i.e. basic functions like scheduling, pairing, traffic engineering etc. may be provided which can be individually adapted by an ICT client, particularly by simply setting configuration parameters.

The corresponding optimization service may be transparently integrated in a cloud operating system and is fully scalable. Thus, the optimization service may be virtualized and multitenant-capable. Even a plug&play integration in a DevOps (Development and IT Operations) infrastructure is possible. Apart from that, the inventive method allows for the optimizer being any separate hardware entity or any software module at any location.

Further advantages and configurations of the invention become apparent from the following description and the enclosed drawings.

It shall be understood that the features described previously and to be described subsequently may be used not only in the indicated combinations but also in different combinations or on their own without leaving the scope of the present invention.

The invention is described in detail by means of an exemplary embodiment and with reference to the drawings.
- Fig. 1: schematically shows a cloud system according to an embodiment of the invention for solving an optimization problem;
- Fig. 2: schematically shows the cloud server of the cloud system shown in figure 1;
- Fig. 3: schematically shows a method for solving an optimization problem according to an embodiment of the invention.

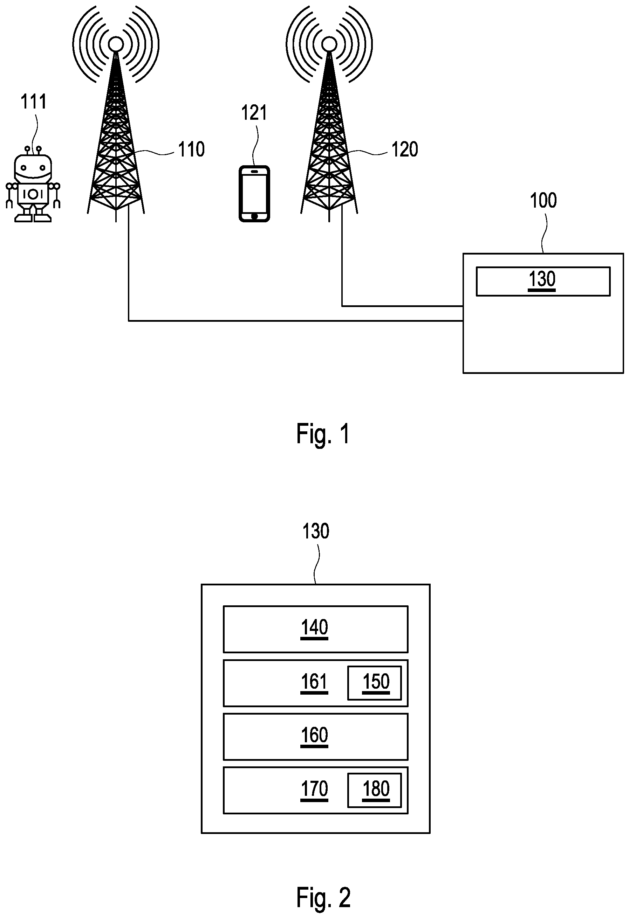

Fig. 1 schematically shows a cloud system 100 according to an embodiment of the invention for solving an optimization problem. The cloud system 100 comprises at least one cloud server 130, usually a plurality of cloud servers 130 of which a single cloud server 130 is illustrated, and may further comprise network components, storage units and special devices which are omitted from the drawings. The cloud system 100 is an edge cloud system with the cloud server 130, correspondingly, being an edge cloud server which is located at and immediately connected to two radio access points 110, 120 of a communication network which is exemplarily illustrated as a mobile communication network but may be a fixed-line communication network in different embodiments. The cloud system 100 may alternatively be remote from the edge in case a low maximum latency is not required.

A first radio access point 110 is a campus radio access point 110 while the second radio access point 120 is a public radio access point 120. The radio access points 110, 120 are 4G or 5G radio access points, respectively. Of course, the cloud system 100 may also be located at and connected to one or more than two radio access points of a mobile communication network wherein each radio access point may independently be either a campus radio access point 110 or a public radio access point 120. For a better differentiation of the radio access points 110, 120, an industrial robot 111 is connected to the campus radio access point 110 and a user equipment 121 configured as a smartphone is connected to the public radio access point 120. Of course, the alternative fixed-line communication network has fixed-line access points instead of the radio access points 110 ,120.

Fig. 2 schematically shows the cloud server 130 of the cloud system 100 shown in figure 1. The cloud server 130 comprises a computing hardware 170 and an optimizer 180 for solving the optimization problem which is configured as a separate hardware entity. The optimizer 180 may be alternatively located remote from the cloud server 130. In these embodiments, the optimizer 180 may be configured as a quantum computer. The cloud server 130 further comprises a cloud operating system 160 which may provide a virtual machine 161 or a container 161.

The cloud server 130 is configured for executing an optimization service 150 and comprises the optimization service 150 which is different from the optimizer 180 and comprised by the virtual machine 161 or by the container 161. In different embodiments, the optimizer is a software module which may be also comprised by a virtual machine or by a container, e.g. the virtual machine 161 or the virtual container 161 or a virtual machine different from the virtual machine 161 or a container different from the container 161. The cloud server 130 furthermore comprises an exemplary client application 140 which may be a backend application of a mobile application. The client application 140 may alternatively not be comprised by the cloud server 130, but instead be comprised and executed by the industrial robot 111 or by the user equipment 121.

It is noted that usually the cloud operating system 160, the virtual machine 161 or the container 161 comprising the optimization service 150, the client application 140 and, in some embodiments, the software optimizer are comprised and executed by a plurality of cloud servers 130 each having a computing hardware 170. The client application 140 may alternatively be executed also by a virtual machine or container provided by the cloud operating system 160, the virtual machine or container being different from the virtual machine 161 or the container 161.

The cloud server 130 may have been upgraded by a computer program product for solving an optimization problem. The computer program product comprises a computer readable storage medium storing a program code which is executable by the cloud server 130, particularly by the hardware entity 170 of the cloud server 130, and causes the cloud server 130 to carry out a method for solving an optimization problem when being executed by a processor of the cloud server 130.

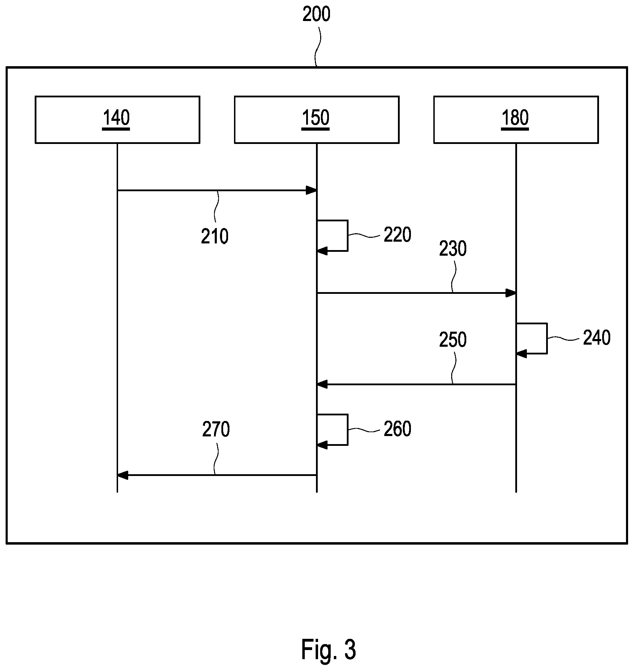

Fig. 3 schematically shows a method 200 for solving an optimization problem according to an embodiment of the invention. The method 200 comprises the following steps.

The client application 140 requests a solution of an optimization problem. The client application 140 transmits 210 an optimization request to the optimization service 150 being executed by the cloud server 130 of the cloud system 100, wherein the optimization request defines the optimization problem. The client application 140 transmits 210 an optimization model, particularly by means of a plurality of arguments, to the optimization service 150 as part of the optimization request.

For example, a scheduler of an access point of a radio cell of a mobile communication network as the client application 140 may request optimal configuration data for the radio cell as the solution of a radio cell configuration problem as the optimization problem.

The optimization service 150 is executed on the virtual machine 161 or in the container 161 provided by the cloud operating system 160 which in turn is executed by the cloud server 130, particularly by the computing hardware 170 of the cloud server 130.

The optimization service 150 receives the optimization request, creates 220 an objective function from the optimization model and transmits 230 the created objective function to the optimizer 180 being different from the optimization service 150, wherein the objective function models the optimization problem. The objective function may be created as a quadratic unconstrained binary optimization (QUBO) model, a linear optimization model or a Monte Carlo mode, wherein the format of the objective function depends on the optimizer 180.

Alternatively, the client application 140 may create the objective function from the optimization model and transmit the created objective function to the optimization service 150 as part of the optimization request. Then the optimization service 150 may simply forward the objective function to the optimizer 180.

The optimization request is transmitted 210 by the client application 140 and received by the optimization service 150 via a REST interface, an XML interface or a file interface of the client application 140 and the optimization service 150, respectively. The objective function may be transmitted by the optimization service 150 to the optimizer via a REST interface, an XML interface or a file interface of the optimization service 150.

The optimizer 180 receives the objective function, calculates 240 an extreme of the received objective function and transmits 250 the calculated extreme to the optimization service 150. The optimizer 180 calculates 240 the extreme of the objective function by linear optimization, annealing, simulated annealing, executing a Monte Carlo algorithm, quantum annealing or, in case the optimizer 180 is a separate quantum computer, by quantum computing.

The optimization service 150 may receive the calculated extreme and calculate 260 the requested solution from the received extreme. The optimization service 150 transmits 270 the requested solution to the client application 140, the solution resulting from the received extreme.

The client application 140 receives the requested solution of the optimization problem.

### Reference numerals

- 100: cloud system
- 110: campus radio access point
- 111: industrial robot
- 120: public radio access point
- 121: user equipment
- 130: cloud server
- 140: client application
- 150: opimization service
- 160: cloud operating system
- 161: virtual machine/container
- 170: computing hardware
- 180: optimizer

- 200: optimization method
- 210: transmit
- 220: create
- 230: transmit
- 240: calculate
- 250: transmit
- 260: calculate
- 270: receive

## Claims

1. A method (200) for solving an optimization problem, comprising the steps:
- a client application (140) requests a solution of an optimization problem and receives the requested solution of the optimization problem, wherein
- the client application (140) transmits (210) an optimization request to an optimization service (150) being executed by a cloud server (130) of a cloud system (100), the optimization request defining the optimization problem;
the optimization service (150) receives the optimization request and transmits (230) an objective function to an optimizer (180) being different from the optimization service (150), the objective function modeling the optimization problem;
- the optimizer (180) receives the objective function, calculates (240) an extreme of the received objective function and transmits (250) the calculated extreme to the optimization service (150); and
- the optimization service (150) transmits (270) the requested solution to the client (140), the solution resulting from the received extreme.

2. The method according to claim 1, wherein the optimizer (180) calculates (240) the extreme of the objective function by linear optimization, annealing, simulated annealing, executing a Monte Carlo algorithm, quantum annealing or quantum computing.

3. The method according to one of claims 1 or 2, wherein the client application (140) creates the objective function from an optimization model and transmits the created objective function to the optimization service (150) as part of the optimization request and the optimization service (150) forwards the objective function to the optimizer (180).

4. The method according to one of claims 1 or 2, wherein the client application (130) transmits (210) an optimization model to the optimization service (150) as part of the optimization request and the optimization service (150) creates (220) the objective function from the optimization model.

5. The method according to one of claims 1 to 4, wherein the optimization service (150) receives the calculated extreme and calculates (260) the requested solution from the received extreme.

6. The method according to one of claims 1 to 5, wherein the optimization service (150) is executed on a virtual machine (161) or in a container (161) provided by a cloud operating system (160) being executed by the cloud server (130).

7. The method according to one of claims 1 to 6, wherein the optimization request is transmitted (210) and received via a REST interface, an XML interface or a file interface of the client application (140) and the optimization service (150), respectively.

8. The method according to one of claims 1 to 7, wherein the objective function is created as a quadratic unconstrained binary optimization (QUBO) model, a linear optimization model or a Monte Carlo model.

9. The method according to one of claims 1 to 8, wherein a scheduler of an access point of a radio cell of a mobile communication network requests optimal configuration data for the radio cell as the solution of a radio cell configuration problem as the optimization problem.

10. A cloud system (100) for solving an optimization problem, comprising an optimizer (180) for solving the optimization problem, an optimization service (150) being different from the optimizer (180) and a cloud server (130) for executing the optimization service, the cloud system (100) being configured to carry out a method (200) according to one of claims 1 to 9.

11. The cloud system according to claim 10, wherein the cloud server (130) comprises the optimization service (150) and/or the optimizer (180).

12. The cloud system according to one of claims 10 or 11, wherein the cloud server (130) is an edge cloud server being located at a radio access point (110, 120) of a mobile communication network.

13. The cloud system according to one of claims 10 to 12, wherein the radio access point is a public radio access point (120) or a campus radio access point (110) and/or the radio access point (110, 120) is a 5G radio access point.

14. The cloud system according to one of claims 10 to 13, wherein the optimizer (180) is configured as a separate hardware entity or as a software module and/or the optimizer (180) is configured as a quantum computer and/or the optimizer (180) is located remote from the cloud server (130).

15. A computer program product, comprising a computer readable storage medium storing a program code, the program code being executable by a cloud server (130) and causing the cloud server (130) to carry out a method (200) according to one of claims 1 to 9 when being executed by a processor of the cloud server (130).

## Amended claims

### Amended claims in accordance with Rule 137(2) EPC.

1. A method (200) for solving an optimization problem, comprising the steps:
- a scheduler of an access point of a radio cell of a mobile communication network, as a client application (140), requests a solution of a radio cell configuration problem as an optimization problem and receives optimal configuration data for the radio cell as the requested solution of the optimization problem, wherein
- the client application (140) transmits (210) an optimization request to an optimization service (150) being executed by an edge cloud server (130) of an edge cloud system (100) being located at the radio access point (110, 120) of the mobile communication network, the optimization request defining the optimization problem;
the optimization service (150) receives the optimization request and transmits (230) an objective function to an optimizer (180) being different from the optimization service (150), the objective function modeling the optimization problem and being created as a quadratic unconstrained binary optimization (QUBO) model;
- the optimizer (180) receives the objective function, calculates (240) an extreme of the received objective function and transmits (250) the calculated extreme to the optimization service (150); and
- the optimization service (150) transmits (270) the requested solution to the client (140), the solution resulting from the received extreme.

2. The method according to claim 1, wherein the optimizer (180) calculates (240) the extreme of the objective function by linear optimization, annealing, simulated annealing, executing a Monte Carlo algorithm, quantum annealing or quantum computing.

3. The method according to one of claims 1 or 2, wherein the client application (140) creates the objective function from an optimization model and transmits the created objective function to the optimization service (150) as part of the optimization request and the optimization service (150) forwards the objective function to the optimizer (180).

4. The method according to one of claims 1 or 2, wherein the client application (130) transmits (210) an optimization model to the optimization service (150) as part of the optimization request and the optimization service (150) creates (220) the objective function from the optimization model.

5. The method according to one of claims 1 to 4, wherein the optimization service (150) receives the calculated extreme and calculates (260) the requested solution from the received extreme.

6. The method according to one of claims 1 to 5, wherein the optimization service (150) is executed on a virtual machine (161) or in a container (161) provided by a cloud operating system (160) being executed by the cloud server (130).

7. The method according to one of claims 1 to 6, wherein the optimization request is transmitted (210) and received via a REST interface, an XML interface or a file interface of the client application (140) and the optimization service (150), respectively.

8. An edge cloud system (100) for solving an optimization problem, comprising an optimizer (180) for solving the optimization problem, an optimization service (150) being different from the optimizer (180) and an edge cloud server (130) for executing the optimization service, the edge cloud server (130) being located at a radio access point (110, 120) of a mobile communication network and the edge cloud system (100) being configured to carry out a method (200) according to one of claims 1 to 7.

9. The cloud system according to claim 8, wherein the cloud server (130) comprises the optimization service (150) and/or the optimizer (180).

10. The cloud system according to claim 8 or 9, wherein the radio access point is a public radio access point (120) or a campus radio access point (110) and/or the radio access point (110, 120) is a 5G radio access point.

11. The cloud system according to one of claims 8 to 10, wherein the optimizer (180) is configured as a separate hardware entity or as a software module and/or the optimizer (180) is configured as a quantum computer and/or the optimizer (180) is located remote from the cloud server (130).

12. A computer program product, comprising a computer readable storage medium storing a program code, the program code being executable by a cloud server (130) and causing the cloud server (130) to carry out a method (200) according to one of claims 1 to 7 when being executed by a processor of the cloud server (130).
